# EUROPEAN PATENT APPLICATION

(11) **EP 2 754 364 A1**
(43) Date of publication of application: **16.07.2014**
(21) Application number: 14150633.7
(22) Date of filing: 09.01.2014
(51) Int. Cl.: A43B 9/08, A43B 7/12, B29D 35/14

(54) **Waterproof and breathable shoe and method of manufacturing the same**

(30) Priority: 15.01.2013 TW 102101498
(71) Applicant: High State Industry Co., Ltd., Taichung City (TW)
(72) Inventor: Wu, Tsung-Ta, West Dist. Taichung City (TW); Chiu, Tien-Yi, Chiayi County (TW); Chen, Shi-Yang, Taichung City (TW)
(74) Representative: Pallini Gervasi, Diego

(57) **Abstract**

A manufacturing method of a waterproof and breathable shoe has a step of preparing a mold (S1). Then, the mold is soaked into the rubber material (S2), and the rubber material can cohere to a surface of the mold. Then, the rubber material cohering to the surface of the mold is dried to form into a thin and integrally molded shoe body on the surface of the mold (S3). Then, an inside layer is combined with the shoe body (S4). Then, the inside layer and the shoe body are reversed inside out and stripped off from the mold at the same time (S5). Finally, the sole is combined with a bottom of the shoe body (S5) to form the waterproof and breathable shoe. Therefore, the shoe can provide a waterproof and breathable effect.

## Description

### 1. Field of the Invention

The present invention relates to a manufacturing method of a shoe, and more particularly to a waterproof and breathable shoe and a method of manufacturing the waterproof and breathable shoe.

### 2. Description of Related Art

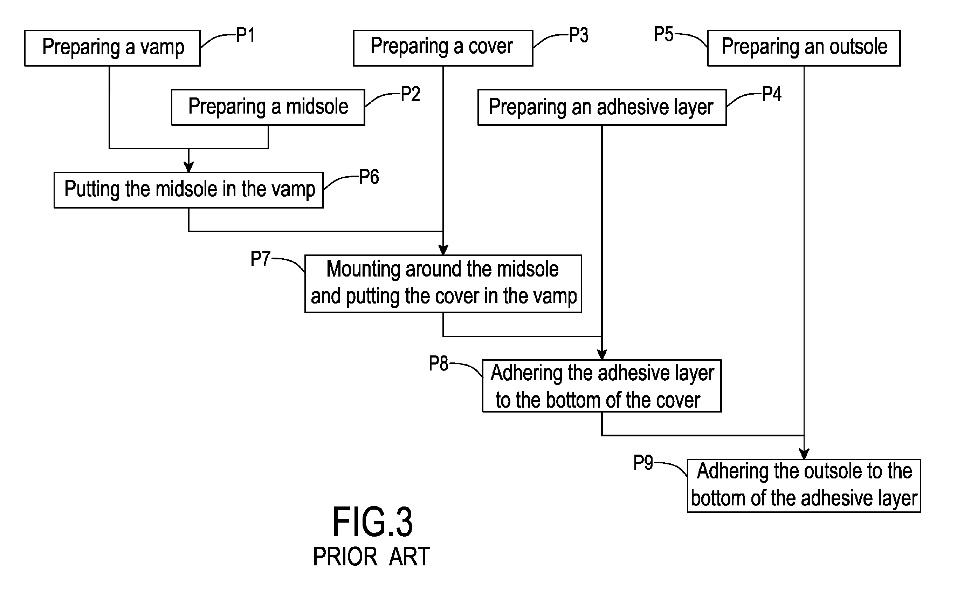

With reference to Fig. 3, a manufacturing method of a conventional waterproof and breathable shoe has steps as follows.

A vamp is prepared (P1), a midsole is prepared (P2), a cover is prepared (P3), an adhesive layer is prepared (P4), and an outsole is prepared (P5).

The midsole is putted in the vamp (P6). Then, the cover is mounted around the midsole and is putted in the vamp (P7). The adhesive layer is adhered to the bottom of the cover (P8). Finally, the outsole is adhered to the bottom of the adhesive layer (P9) to manufacture the waterproof and breathable shoe.

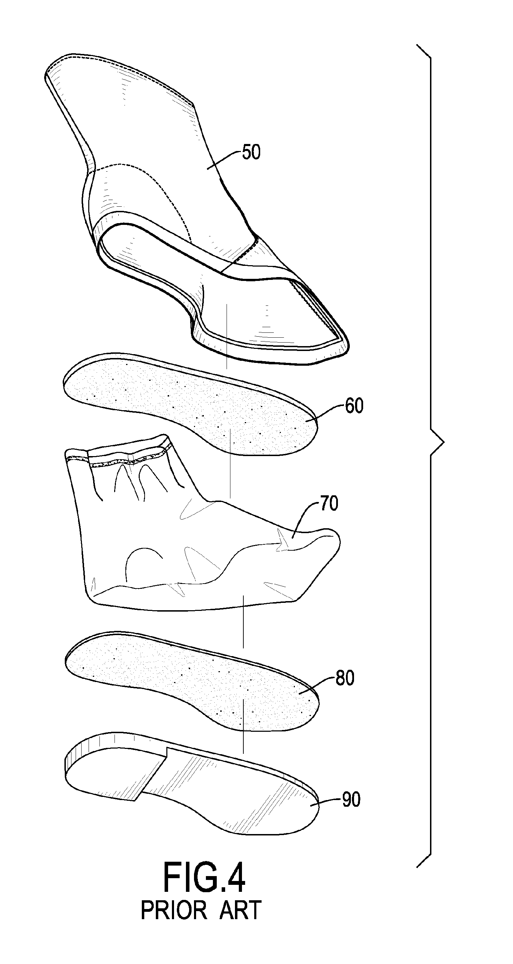

With reference to Fig. 4, the conventional waterproof and breathable shoe made of the described manufacturing method has a vamp 50, a midsole 60, a cover 70, an adhesive layer 80 and an outsole 90. The vamp 50 is manufactured by sewing. The midsole 60 is mounted in the cover 70. The cover 70 is mounted in the vamp 50. The adhesive layer 80 is adhered between a bottom of the cover 70 and the outsole 90. The cover 70 is waterproof and breathable to provide a waterproof and a breathable effect for the waterproof and breathable shoe.

However, the structure and the manufacturing method of the conventional waterproof and breathable shoe are complicated, such that the manufacturing cost is high. Further, the vamp 50 is manufactured by sewing, so the vamp 50 has multiple tailoring holes. Therefore, water may still enter into the conventional shoe from the tailoring holes of the vamp 50.

The main objective of the present invention is to provide a manufacturing method of a waterproof breathable shoe and the waterproof and breathable shoe manufactured by the method to resolve the aforementioned problems.

The manufacturing method of the waterproof breathable shoe has steps as follows.
1) Preparing a mold.
2) Soaking the mold into a rubber material: the mold is soaked into the rubber material, and the rubber material can cohere to a surface of the mold.
3) Drying the rubber material: the rubber material cohering to the surface of the mold is dried to form into a thin and integrally molded shoe body on the surface of the mold.
4) Combining an inside layer: the inside layer is combined with the shoe body.
5) Reversing and stripping off the shoe body: the inside layer and the shoe body are reversed inside out and stripped off from the mold at the same time, such that the inside layer is located at an inside of the shoe and the shoe body forms an exterior part of the shoe.
6) Combining a sole: the sole is combined with a bottom of the shoe body.

A waterproof and breathable shoe as manufactured by the method has a shoe body, an inside layer and a sole.

The shoe body is integrally molded and has an inside surface and an outside surface opposite to the inside surface. The inside layer is combined nonwovenly on the inside surface of the shoe body. The sole is combined with the outside surface of the shoe body and is located at a bottom of the shoe body.

Other objectives, advantages and novel features of the present invention will become more apparent from the following detailed description when taken in conjunction with the accompanying drawings.

### IN THE DRAWINGS

Fig. 1 is a preferred embodiment of a production process of a waterproof and breathable shoe in accordance with the present invention;
Fig. 2 is an exploded perspective view in partial section of the waterproof and breathable shoe manufactured by the method in Fig. 1;
Fig. 3 is a production process of a conventional waterproof and breathable shoe in accordance with the prior art; and
Fig. 4 is an exploded perspective view of the conventional waterproof and breathable shoe manufactured by the method in Fig. 3.

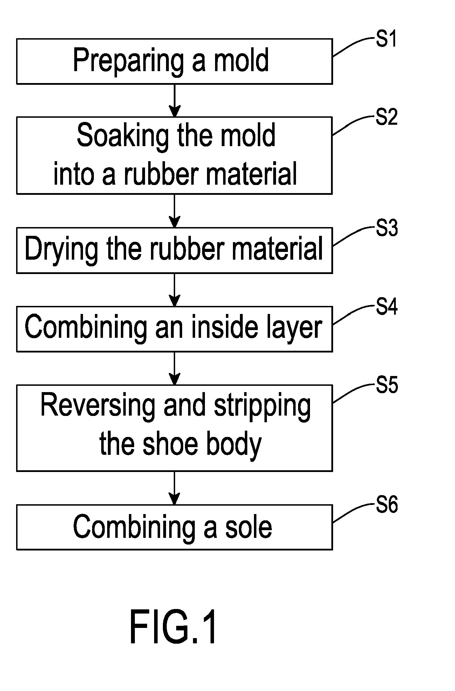

With reference to Fig. 1, a preferred embodiment of a manufacturing method of a waterproof and breathable shoe in accordance with the present invention has steps as follows.

A mold is prepared (S1). The mold is molded into a shape of a sole , and a size of the mold is determined according to a foot size of a user. A surface of the mold may be smooth, matted, or may have patterns.

The mold is soaked into a rubber material (S2), such that the rubber material can cohere to the surface of the mold. The rubber material may be PU (Polyurethane), NR (natural rubber), NBR (Nitrile Butadiene Rubber), Neoprene, PVA (Polyvinyl Alcohol), Viton or PVC (Polyvinylchloride).

PU, NR, NBR, Neoprene, PVA, Viton, and PVC are all waterproof and breathable. Furthermore, NR is wearable, anti-acid and anti-alkali. NBR is wearable and cut-resistant. Neoprene is weather resistant and seawater-resistant. PVA is wearable, cut-resistant and organic-solvent resistant. Viton is anti-acid, anti-alkali, and chemical-resistant. PVC can be dyed or printed easily and is inexpensive.

The rubber material cohering to the surface of the mold is dried (S3), such that the rubber material can be formed into a thin and integrally molded shoe body on the surface of the mold. The shoe body has a structure matching the surface of the mold. If the surface of the mold is smooth, the structure of the shoe body is also smooth. If the surface of the mold is matted, the structure of the shoe body is also matted. If the surface of the mold has patterns, the structure of the shoe body also has matching patterns.

An inside layer is combined with the shoe body (S4).

The inside layer and the shoe body are reversed inside out and stripped off from the mold at the same time (S5), such that the inside layer is located at an inside of the shoe in accordance with the present invention, and the shoe body forms an exterior part of the shoe in accordance with the present invention.

A sole is combined with the bottom of the shoe body (S6) to form the waterproof and breathable shoe in accordance with the present invention.

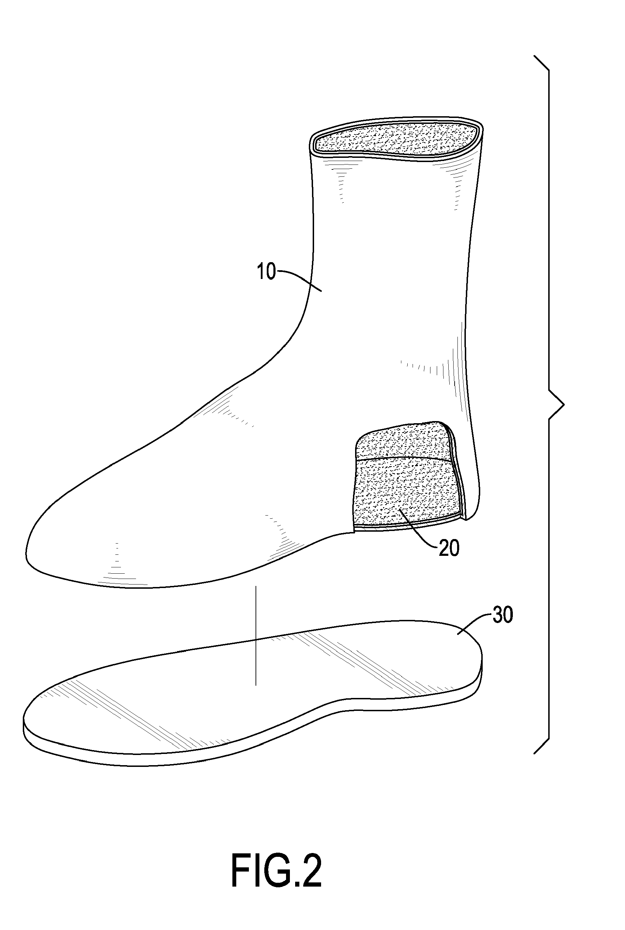

With reference to Fig. 2, the waterproof and breathable shoe made of the described manufacturing method in accordance with the present invention has a shoe body 10, an inside layer 20 and a sole 30.

The shoe body 10 is integrally molded and has an outside surface and an inside surface. The outside surface of the shoe body 10 may be smooth, matted, or may have patterns.

The shoe body 10 may be made of PU, NR, NBR, Neoprene, PVA, Viton, or PVC. The shoe body 10 can be manufactured by different materials according to different demands of users.

The inside layer 20 is combined nonwovenly on the inside surface of the shoe body 10. The inside layer 20 may be spray-combined with or adhered to the shoe body 10. The inside layer 20 may be a soft woven or non-woven fiber to provide a moisture-absorbing, warm, and shock-absorbing effect.

The sole 30 may be heat-pressing combined with or be adhered to a bottom of the shoe body 10. The sole 30 is wearable, shockproof, and sound-absorbing. The sole 30 may further provide an elevation and aesthetic effect.

From the above description, it is noted that the shoe in accordance with the present invention has the following advantages. The structure and the manufacturing method of the waterproof and breathable shoe as described are simple, such that the manufacturing cost of the shoe can be reduced effectively. The shoe body 10 is integrally molded to speed up the production time of the shoe. The inside layer 20 is nonwovenly combined with the shoe body 10 to achieve a waterproof effect.

Even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A manufacturing method of a waterproof and breathable shoe, **characterized in that** the manufacturing method has steps of:
preparing a mold (S1);
soaking the mold into a rubber material (S2), and the rubber material cohering to a surface of the mold;
drying the rubber material (S3) on the surface of the mold, and the rubber material being dried to form into a thin and integrally molded shoe body on the surface of the mold;
combining an inside layer (S4) with the shoe body;
reversing the inside layer and the shoe body and stripping the inside layer and the shoe body (S5) off from the mold at the same time; and
combining a sole (S6) with a bottom of the shoe body.

2. The manufacturing method of a waterproof and breathable shoe as claimed as in claim 1, wherein
in the step of preparing a mold (S1), the mold has patterns on the surface of the mold; and
in the step of drying the rubber material (S3), multiple patterns matching the patterns of the mold are formed on the shoe body.

3. The manufacturing method of a waterproof and breathable shoe as claimed as in claim 2, wherein in the step of soaking the mold into a rubber material (S2), the rubber material is made of PU, NR, NBR, Neoprene, PVA, Viton or PVC.

4. A waterproof and breathable shoe as manufactured by the method as claimed in claim 1, **characterized in that** the waterproof and breathable shoe has:
a shoe body (10) being integrally molded and having
an inside surface; and
an outside surface opposite to the inside surface;
an inside layer (20) combined nonwovenly on the inside surface of the shoe body (10); and
a sole (30) combined with the outside surface of the shoe body (10) and located at a bottom of the shoe body (10).
